# EUROPEAN PATENT APPLICATION

(11) **EP 3 282 645 A1**
(43) Date of publication of application: **14.02.2018**
(21) Application number: 17182880.9
(22) Date of filing: 24.07.2017
(51) Int. Cl.: H04L 12/28

(54) **APPARATUS AND METHOD FOR CONTROLLING THE NOISE LEVEL OF APPLIANCES**

(30) Priority: 10.08.2016 US 201615233196
(71) Applicant: Whirlpool Corporation, Benton Harbor, MI 49022 (US)
(72) Inventor: Gary, Jr., Wyndham F., 21025 Comerio (IT); Kaul, Sucheta, 21025 Comerio (IT); Laux, Peter C., 21025 Comerio (IT); Osborn, Ian, 21025 Comerio (IT); Pickles, Ernest Calvin, 21025 Comerio (IT)
(74) Representative: Guerci, Alessandro

(57) **Abstract**

A system and method for controlling an appliance (12, 13, 32, 33, 52, 53)with respect to the appliance's noise level, in which a signal relating to the noise level emitted by the appliance (12, 13, 32, 33, 52, 53) is received, and a determination of whether to continue or interrupt a cycle of operation being conducted by the appliance (12, 13, 32, 33, 52, 53) is made based at least on part upon the receipt of the signal.

## Description

### BACKGROUND OF THE INVENTION

Aspects of the present disclosure relate to management of the operation of home appliances.

### BACKGROUND OF THE INVENTION

Home appliances perform various cycles of operation, and users are increasingly interested in home appliances that reduce the total noise levels of a collection of two or more appliances at any given time. Enabling noise level control in appliances benefits user comfort. Previous noise management solutions have proven inadequate and hence the disclosed invention represents a significant improvement over the existing art.

### SUMMARY OF THE INVENTION

In one aspect, the invention relates to a home appliance having a controller configured to control at least two cycles of operation associated with a physical article in the home appliance, wherein a first cycle of operation has a first noise level and a second cycle of operation has a second noise level less than the first noise level. The home appliance includes a communication module for communicating with a second appliance over a peer to peer network. A processor is coupled with the communication module and the controller, wherein the processor is configured to determine, through communicating with the second appliance, a schedule to operate the first cycle of operation to reduce ambient noise level in the home.

In another aspect, the invention relates to a home network comprising a first appliance and a second appliance in a home. The first appliance is configured to perform a first cycle of operation associated with a physical article in the first appliance, wherein the first cycle of operation has a first noise level. The second appliance in the home is configured to perform a second cycle of operation associated with a physical article in the second appliance, wherein the second cycle of operation has a second noise level less than the first noise level. The first and second appliances are in communication with each other and one of them is configured to determine, via the communication, a schedule to operate the first or second cycle of operation to reduce ambient noise level in the home.

### BRIEF DESCRIPTION OF THE DRAWINGS

FIG. 1 is a schematic view of a system for controlling an appliance according to a first embodiment of the invention.
FIG. 2 is a schematic view of a system for controlling an appliance according to a second embodiment of the invention.
FIG. 3 is a schematic view of a system for controlling an appliance according to a third embodiment of the invention.
FIG. 4 is a flowchart representing the negotiation logic for a processor associated with an appliance.

### DETAILED DESCRIPTION

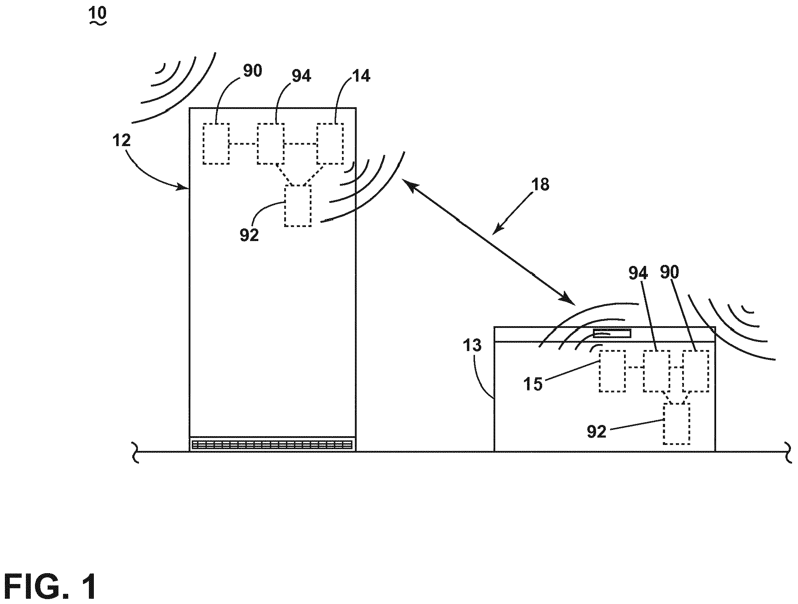

FIG. 1 is a schematic view of a system 10 according to the first embodiment of the invention. The system 10 includes at least two appliances 12 and 13 having receivers 14 and 15, which form part of a communication module in each appliance, and which are in communication with each other via at least one peer to peer communication network, such as a Bluetooth pairing 18. Peer to peer communication protocols other than Bluetooth may also be used.

The appliances 12 and 13 are illustrated herein as refrigerators, but it will be understood the system 10 may include any home or domestic appliances that perform a particular job in a home, including those relating to cleaning, cooking, or food preservation. The home appliances 12 and 13 may include a housing at least partially defining a treating chamber and having an open face selectively closed by a cover, such as a door, for providing access to the treating chamber. The treating chamber can receive one or more article(s), and the appliances 12 and 13 may treat the article(s) according to a plurality of useful cycles of operation. For example, in the case of a refrigerator, the treating chamber can receive one or more items of food, and the refrigerator can perform a cooling operation on the food in the treating chamber. While the appliances 12 and 13 are illustrated herein as refrigerators, other types of appliances and their various combinations are contemplated, including, but not limited to a freezer, a dishwasher, a range, a stove, an oven, a cooktop, a clothes washing machine, or a clothes dryer may be used with the system 10. All of these examples of home appliances can receive one or more article(s), and can perform useful cycles of operation on the article(s). Other examples of appliance types typically found within a home and which may be used with the system include an air conditioner, a water heater, and a pool pump.

While only two appliances 12 and 13 are shown in FIG. 1, it should be understood that the system 10 can include more than two appliances. The appliances 12 and 13 can be located within a single home or at a common location.

The receiver 14 can be used to connect the appliance 12 to the receiver 15 of appliance 13, and these receivers may be separate or external devices or it may be carried by or built into the appliances 12 and 13. The receivers 14 and 15 can communicate with the appliance by a wireless or wired connection. The receiver 14 is associated with the appliance 12 for receiving signals sent via the Bluetooth pairing 18. The receivers 14 and 15 can also have a transmitter, whereby signals from the appliance can be transmitted by the Bluetooth pairing 18 wirelessly.

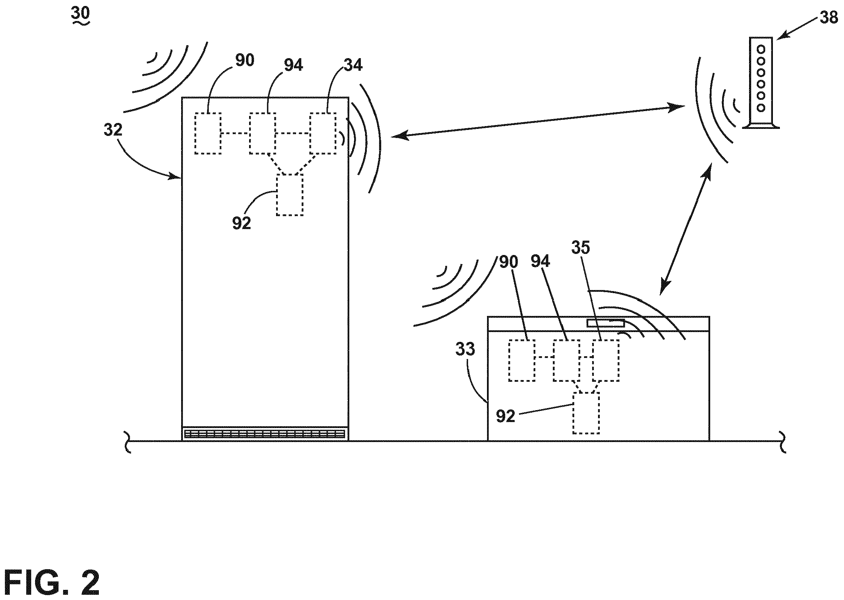

FIG. 2 is a schematic view of a system 30 according to the second embodiment of the invention. The system 30 includes at least two appliances 32 and 33 having receivers 34 and 35, which form part of a communication module in each appliance, and which are in communication with each other via at least one communication network, such as a local Wi-Fi network 38. Wireless networking protocols other than Wi-Fi may also be used.

The appliances 32 and 33, illustrated herein as refrigerators, may, like appliances 12 and 13, be any kind of home or domestic appliances that perform a particular job in a home, including those relating to cleaning, cooking, or food preservation. Other examples of appliance types typically found within a home and which may be used with the system include an air conditioner, a water heater, and a pool pump.

While only two appliances 32 and 33 are shown in FIG. 2, it should be understood that the system 30 can include more than two appliances. The appliances 32 and 33 can be located within a single home or at a common location.

The receiver 34 can be used to connect the appliance 32 to the receiver 35 of appliance 33, and these receivers may be separate or external devices or it may be carried by or built into the appliances 32 and 33. The receivers 34 and 35 can communicate with the appliance by a wireless or wired connection. The receiver 34 is associated with the appliance 32 for receiving signals sent via the Wi-Fi network 38. The receivers 34 and 35 can also have a transmitter, whereby signals from the appliance can be transmitted via the Wi-Fi network 38 wirelessly.

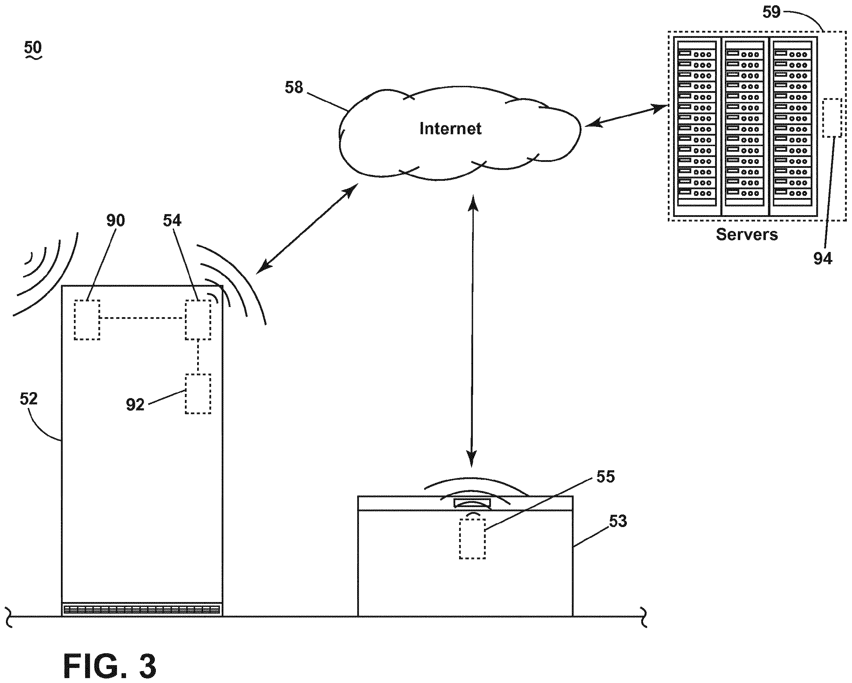

FIG. 3 is a schematic view of a system 50 according to the third embodiment of the invention. The system 50 includes at least two appliances 52 and 53 having receivers 54 and 55, which form part of a communication module in each appliance, and which are in communication with a remote device 59 via a network 58.

The appliances 52 and 53, illustrated herein as refrigerators, may, like appliances 12 and 13 or 32 and 33, be any home or domestic appliances that perform a particular job in a home, including those relating to cleaning, cooking, or food preservation.

While only two appliances 52 and 53 are shown in FIG. 3, it should be understood that the system 50 can include more than two appliances. The appliances 52 and 53 can be located within a single home or at a common location.

The receiver 54 and 55 can be used to connect the appliances 52 and 53 to the internet, and these receivers may be separate or external devices or it may be carried by or built into the appliances 52 and 53. The receivers 54 and 55 can communicate with the appliance by a wireless or wired connection. The receivers 54 and 55 are associated with the appliances 52 and 53 for receiving signals sent by the remote device 59 via the network 58. The receivers 54 and 55 can also have transmitters, whereby signals from the appliances can be transmitted to the remote device 59 via the network 58 wirelessly.

The remote device 59 can communicate information with and/or respond to requests from the appliance 52 and 53 from a remote location, typically outside of the home. The remote device 59 can include a data storage unit for storing data, such as historical usage or operational data for the appliances 52 and 53 based on information received.

The remote device 59 may comprise one or more server(s) which manages the appliances' access to a centralized resource or service. For example, the remote device 59 may be a server of a manufacturer of the appliances 52 and 53 or some other third-party, and may communicate noise information similar to that from a utility provider. While only one remote device 59 is shown in FIG. 3, it should be understood that the system 50 may include multiple remote devices 59.

The network 58 may be a private or public network, and may typically be a WAN (wide area network) such as the Internet.

In all embodiments of the invention described above, the appliances may have some infrastructure in place for mapping noise levels to their respective cycles of operation. This infrastructure may comprise an audio recording device and/or sensor 90 that actually records the noise levels emitted by each individual appliance during each specific cycle of operation. This audio device and/or sensor 90 may be physically built into one or more appliances or it may be a standalone unit installed in the home in some proximity to the appliances in question in the home. This noise level may be registered in one way by recording noise levels associated with each specific cycle of operation in number of decibels at a certain specific distance from the appliance. In addition, or alternatively, noise level information for cycles of operation of the appliance may be stored in memory on the appliance during the manufacturing process and/or updated periodically.

The audio recording device and/or sensor 90 may also be programmed to record the ambient level of noise in the home, when no noisy cycles of operation are being run by any appliance. This may serve the purposes of noting differences in ambient sound levels to detect the presence of users in the vicinity, thereby enabling a controller or a plurality of controllers 92 internally or externally situated with respect to the appliances, to regulate cycles of operation such that less noise is produced when users are in the vicinity. Alternatively, the input regarding user proximity may also be received by the user via an application on a mobile device such as a cellular phone etc., or via a website on the internet.

There also may be present a processor 94 for each appliance coupled to both the controller and the audio recording device and/or sensor, that gathers ambient and cycle noise data, and uses this data to schedule specific cycles of operation. This processor 94 may be an integral part of each appliance (as per FIG. 1 and FIG. 2), or may be part of the remote device (as per FIG. 3).

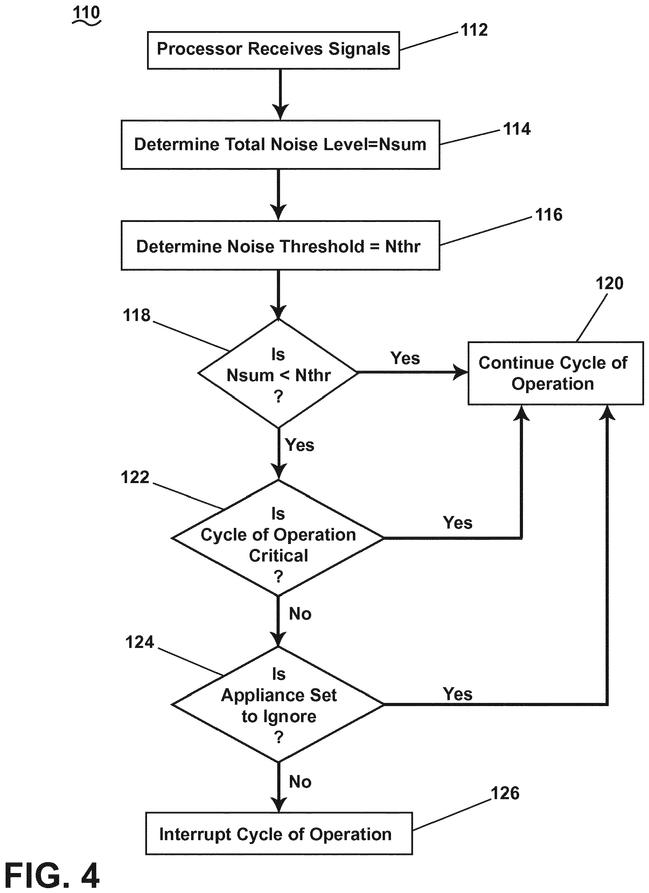

As appliances may need to run various cycles involved in their operation in a certain sequence, there may be, based on the current states of the appliances, a communication involving a negotiation between two or more appliances based on these current states, as to a schedule for performing each individual appliance's operations. For example, with the existence of multiple appliances installed in a common area with each being aware of the others, negotiation for priorities as to which unit is permitted to turn on or to operate a given cycle at a given time and in what operational state at any given time can be managed to minimize sound. This negotiation may occur directly between appliances (as per FIG. 1 and FIG. 2), or may occur via the remote device (as per FIG. 3). This negotiation protocol is illustrated in the flowchart 110 in FIG. 4.

In FIG. 4, the flowchart 110 illustrates a simplified representation of the logic process involved in the decision making for postponing or allowing a particular cycle of operation in a particular appliance at a particular time. According to step 112, the processor 94 in an appliance in any one of the aforementioned systems receives signals from other appliances in the system regarding their current states and the cycles being currently run, signals from the audio sensors regarding ambient noise levels, user noise levels, and/or appliance noise levels associated with the specific cycles currently being run. This data may be entirely or in part be generated by the audio sensors on the appliances, or may at least in part be derived from archived and/or pre-programmed data installed into a memory unit of an appliance. Thus the total noise level in a space occupied by the system at any given time can be determined as a step 114, in decibels, and can be represented as Nsum. The noise level Nsum may represent a predicted or actual current noise level, and/or a predicted noise level for a given future time, based on scheduled cycles, and predicted patterns of user occupancy in the space. The processor 94 can then determine an acceptable noise threshold Nthr at the specific time in question based on pre-programmed values, or user-defined values, which may, amongst other things, depend on time of the day and user proximity to the appliances of interest. This determination can be executed in the logic sequence via a step 116. A dynamic determination can be made to check if Nₛᵤₘ < Nₜₕᵣ via a step 118. If it is found to be true (YES), the proposed cycle of operation can be continued by the appliance without interruptions according to step 120. If the answer to step 118 is NO, then the system logic moves to step 122, wherein the criticality of the operation is assessed. For example, in a refrigerator, parameters may be set to maintain a temperature of 40°F in a defined space in the appliance. Therefore, the implementation of the cooling cycle becomes mandatory regardless of projected noise by continuation of the cycle. On the other hand, noise determination in Nₛᵤₘ may be an indicator of a fault in the appliance that the processor 94 can determine. In another example, if there were a detrimental accumulation of frost in a freezer at a given time, the control logic may determine the defrost cycle to be critical at a given time. If the determination from step 122 is YES, then the control logic moves to step 120 and continues the cycle of operation without interruptions. If the determination from step 122 is NO, then the control logic moves to a step 124 where the control logic determines whether the appliance in question is set to an "ignore" status. An "ignore" status may include the system being automatically or manually programmed to ignore the determination at step 118. If the determination from step 124 is YES, then the control logic moves to step 120 and continues the cycle of operation without interruptions. If the determination from step 124 is NO, then the control logic moves to a step 126, whereby it temporarily interrupts the cycle of operation.

The processor 94 may send instructions to the controller 92 based on the results of the control logic executed as described in the above paragraph, either through physical wires, or wirelessly. In the embodiments in FIGs. 1 and 2, these instructions may be received from dedicated controllers for the appliances. In the embodiment in FIG. 3, these instructions may be sent via the processor 94 located as part of the remote device 59. In this case, the instructions would be directed to the specific devices of interest in the household, by using unique identifiers to recognize each individual appliance, such as the appliances' MAC addresses.

In all embodiments, the processor 94 in a given appliance will know, either by the sensor 90, or by historical output data recorded over time, or by the data stored at manufacture the expected noise levels of various components in the appliance. For example, an appliance (its motors and mechanisms) will typically operate at a set of different speeds. If two motors, fans, pumps, compressors, etc. were designed to operate at a specific speed for a given circumstance, there is typically a tolerance (+/- of that designed speed) at which the units will actually operate. If two similar units were to operate in the same space at the same time, they will typically not operate at the same speed, even if designed to do so and even if they operate within their tolerances. The result can be an extremely annoying "WOW-WOW-WOW" sound that may be amplified by harmonics, etc. In one aspect of the invention, an appliance, either in response to an already operating appliance or in negotiation with another appliance, may reset a target operational speed of the soon to be operating unit to be sufficiently separated from the other in order to minimize unwanted noise.

As well, an aspect of invention will consider that since appliances are in communication with each other, either directly or indirectly, it is possible for a first appliance to have apriori knowledge of a second appliance's noise data, historical operational data, and schedule for operation, if any. Consequently, the first appliance can establish a negotiation with the second appliance before the first appliance operates a cycle. Further, consider a scenario when the ambient noise is already minimal, such as when a baby is sleeping in the house. An appliance, having data about noise levels programmed at manufacture, a processor 94 that knows that operating a cycle will create a sound differential between the ambient noise level and the noise level during the cycle, may defer operation of the cycle until a smaller sound differential is possible.

While the invention has been specifically described in connection with certain specific embodiments thereof, it is to be understood that this is by way of illustration and not of limitation.

## Claims

1. A home appliance (12, 13, 32, 33, 52, 53) comprising:
a controller (92) configured to control at least two cycles of operation, wherein a first cycle of operation has a first noise level and a second cycle of operation has a second noise level less than the first noise level;
a communication module (14, 15, 34, 35, 54, 55) for communicating with a second appliance (12, 13, 32, 33, 52, 53) over a network (18, 38, 58); and
a processor (94) coupled with the communication module (14, 15, 34, 35, 54, 55) and the controller (92), wherein the processor (94) is configured to determine, based on information from the second appliance (12, 13, 32, 33, 52, 53), a schedule to operate at least one of the first cycle of operation or the second cycle of operation to reduce ambient noise level in the home.

2. The home appliance (12, 13, 32, 33, 52, 53) of claim 1 further comprising a data store where a noise level is associated with at least one cycle of operation.

3. The home appliance (12, 13, 32, 33, 52, 53) of claim 2 wherein the noise level is a value representing decibels at a predetermined distance from the home appliance.

4. The home appliance (12, 13, 32, 33, 52, 53) according to any of claims 1 through 3 further comprising a sensor (90) to detect the ambient noise level in the home.

5. The home appliance (12, 13, 32, 33, 52, 53) of claim 4 wherein the processor (94) is configured to determine the schedule based also on the ambient noise level.

6. The home appliance (12, 13, 32, 33, 52, 53) of claim 1 wherein the communication with the second appliance (12, 13, 32, 33, 52, 53) includes negotiating with the second appliance (12, 13, 32, 33, 52, 53) via exchange of data about current operating states.

7. The home appliance (12, 13, 32, 33, 52, 53) of claim 1 wherein the appliance (12, 13, 32, 33, 52, 53) is further configured to control a third cycle of operation, wherein the third cycle of operation will be executed regardless of the ambient noise level in the home.

8. The home appliance (12, 13, 32, 33, 52, 53) of claim 1 wherein the appliance (12, 13, 32, 33, 52, 53) is configured to ignore the ambient noise level in the home.

9. A home network (18, 38, 58) comprising:
a first appliance (12, 13, 32, 33, 52, 53) in a home configured to perform a first cycle of operation, wherein the first cycle of operation has a first noise level;
a second appliance (12, 13, 32, 33, 52, 53) in the home configured to perform a second cycle of operation, wherein the second cycle of operation has a second noise level less than the first noise level;
wherein the first and second appliances (12, 13, 32, 33, 52, 53) are in communication with each other; and
wherein at least one of the first or second appliances (12, 13, 32, 33, 52, 53) is configured to determine, via the communication, a schedule to operate the first or second cycle of operation to reduce ambient noise level in the home.

10. The home network of claim 9 wherein the at least one of the first and second appliances (12, 13, 32, 33, 52, 53) has a data store where a noise level is associated with at least one cycle of operation.

11. The home network of claim 10 wherein the noise level is a value representing decibels at a predetermined distance from at least one of the first and second appliances (12, 13, 32, 33, 52, 53).

12. The home network according to any of claims 9 through 11 wherein at least one of the first and second appliances (12, 13, 32, 33, 52, 53) has a sensor (90) to detect the ambient noise in the home.

13. The home network of claim 12 wherein the at least one of the first and second appliances (12, 13, 32, 33, 52, 53) is configured to determine the schedule based also on the ambient noise.

14. The home network of claim 9 wherein the at least one of the first and second appliances (12, 13, 32, 33, 52, 53) is further configured to control a third cycle of operation, wherein the third cycle of operation will be executed regardless of the ambient noise level in the home.

15. The home network of claim 9 wherein the at least one of the first and second appliances (12, 13, 32, 33, 52, 53) is configured to ignore the ambient noise level in the home.
